# EUROPÄISCHE PATENTSCHRIFT

(11) **EP 1 752 258 B1**
(45) Veröffentlichungstag und Bekanntmachung des Hinweises auf die Patenterteilung: **04.04.2012**
(21) Anmeldenummer: 06118239.0
(22) Anmeldetag: 01.08.2006
(51) Int. Cl.: B25D 17/08, B25D 17/26, B23B 31/00

(54) **Werkzeug mit einem Einsteckende**
Tool with shank
Outil avec tige de fixation

(30) Priorität: 11.08.2005 DE 102005038089
(43) Veröffentlichungstag der Anmeldung: 14.02.2007
(73) Patentinhaber: HILTI Aktiengesellschaft, 9494 Schaan (LI)
(72) Erfinder: Assel, Thorsten, 86899 Landsberg (DE); Starkmann, Josef, 86857, Hurlach (DE); Greitmann, Ralf, 86916, Kaufering (DE); Wetter, Christoph, 6800, Feldkirch (AT)
(74) Vertreter: Wildi, Roland

(56) Entgegenhaltungen:
- EP-A1- 1 166 933
- DE-A1- 19 805 187
- US-A- 1 959 516

## Beschreibung

Die Erfindung bezeichnet ein zumindest teilweise von einer Handwerkzeugmaschine schlagend angetriebenes Werkzeugs mit einem Einsteckende, insbesondere einen überwiegend aus Werkstoffstahl bestehenden Schlagbohrer oder einen Schlagmeissel mit radial eingeprägten Drehmitnahme- und Verriegelungsnuten.

Sowohl das Werkzeug als auch die Werkzeugaufnahme unterliegen im Betrieb eines Bohr- bzw. Schlaghammers durch die Übertragung von Schlag und Drehmoment einer grossen Beanspuchung. Insbesondere beim Einsatz von Werkzeugen mit Durchmessern grösser 14 mm kommt es infolge der damit verbundenen hohen Drehmomentbelastung zu verstärktem Verschleiss und einer damit einhergehenden geringeren Standzeit von Einsteckende und Werkzeugaufnahme. Zur Verringerung des Verschleisses werden üblicherweise die zur Drehmomentübertragung verwendeten Mitnahmeflächen zwischen Werkzeugaufnahme und Einsteckende möglichst gross ausgebildet. Ziel ist es dabei, die Flächenbelastung und damit die Beanspruchung zu senken. Zudem ist es üblich, die dem Verschleiss unterliegenden Metallteile mit Methoden wie Borieren oder Härten verschleissfester auszubilden.

Zumindest theoretisch kann der Verschleiss durch ein zusätzliches Einfetten eines sauberen Einsteckendes vor dem Einsetzen in die Werkzeugaufnahme wesentlich vermindert werden, praktisch erfolgt dies zumindest im Baugewerbe jedoch unzureichend. Zudem lagern sich an ungenutzten, eingefetteten Einsteckenden vermehrt Schmutzpartikel an, insbesondere in den Drehmitnahme- und Verriegelungsnuten, wodurch ein unsauberes, eingefettetes Einsteckende ebenfalls den Verschleiss erhöht.

Nach der DE19805187 erfolgt die Schmierung des Einsteckendes eines schlagend angetriebenen Werkzeugs über einen Schmiermittelvorrat in der Werkzeugaufnahme.

Nach der DE9013190U ist bei einem aus Werkstoffstahl bestehenden einteiligen Einsteckende eine Flanke der Drehmitnahmenut konkav ausgebildet, um einen Kanal für die Verteilung des Schmiermittels auszubilden, welche in der Werkzeugaufnahme aufgetragen wird.

Nach der EP1166933 ist ein aus Werkstoffstahl bestehendes, schlagend angetriebenes Werkzeug mit einem SDS-Einsteckende mit radial eingeprägten Drehmitnahme- und Verriegelungsnuten gesamthaft mit einer Oberflächenbeschichtung aus Molybdänsulfid, Graphit oder PTFE versehen, die im Bereich des Einsteckendes als Schmierstoff für eine Trockenschmierung wirken. Eine derartige dünne Oberflächenbeschichtung ist jedoch an den beanspruchten, verschleissbehafteten Mitnahmeflächen schnell abgenutzt und deren Schmiermittelinhalt für die Trockenschmierung deshalb bezüglich der Standzeit des Werkzeugs vorzeitig verbraucht.

Die Aufgabe der Erfindung besteht in der Realisierung eines Schlagwerkzeugeinsteckendes mit einer sich über die Standzeit des Werkzeugs erstreckenden Trockenschmierung.

Die Aufgabe wird im Wesentlichen durch die Merkmale des Anspruchs 1 gelöst. Vorteilhafte Weiterbildungen ergeben sich aus den Unteransprüchen.

So weist ein Einsteckende eines zumindest teilweise von einer Handwerkzeugmaschine schlagend antreibbaren Werkzeugs zumindest einen selbstschmierenden Schmierstoffeinsatz auf, welcher in einer zugeordneten Schmiereinsatzausnehmung im Grundkörper des Werkzeugs befestigt ist.

Durch den im Einsteckende befestigten selbstschmierenden Schmierstoffeinsatz steht über die Standzeit des Werkzeugs eine ausreichende Schmierstoffmenge zur Verfügung.

Vorteilhaft beinhaltet der Schmierstoffeinsatz ein Trockenschmiermittel, vorzugsweise Molybdänsulfid, Graphit oder PTFE, wodurch der bspw. mit dem feinverteilten Trockenschmiermittel getränkte Schmierstoffeinsatz selbst aus einem geeigneten porösen Trägermaterial herstellbar ist.

Vorteilhaft besteht das poröse Trägermaterial aus einem Sinterwerkstoff, wodurch über dessen hohen Elastizitätsmodul auch bei hohen Betriebstemperaturen eine hinreichende Formstabilität gewährleistet ist.

Alternativ besteht das poröse Trägermaterial aus einem hochtemperaturbeständigen Polymerwerkstoff, vorzugsweise Polyetheretherketon (PEEK), Polyoxymethylen (POM) oder Polyphenylensulfid (PPS), wodurch bspw. mittels Spritzguss eine ökonomische Herstellung der Schmierstoffeinsätze als Massenware möglich ist.

Vorteilhaft ist der Schmierstoffeinsatz stoffschlüssig in der zugeordneten Schmiereinsatzausnehmung befestigt, wodurch mittels Kleben oder Löten eine grossflächig wirkende, technologisch einfache und ökonomisch effektive Befestigung nutzbar ist.

Vorteilhaft ist der Schmierstoffeinsatz formschlüssig in der zugeordneten Schmiereinsatzausnehmung befestigt, wodurch auch bei einem mit Stosswellen mechanisch hoch beanspruchten Einsteckende eine dauerhafte Befestigung erzielt ist. Die formschlüssige Befestigung kann sowohl alternativ als auch zusätzlich zur stoffschlüssigen Befestigung erfolgen.

Vorteilhaft ist der Schmierstoffeinsatz länglich ausgebildet, wodurch er optimal für eine eindimensionale Hin- und Herbewegung dimensioniert sowie längs einer Achse fixierbar ist.

Vorteilhaft ist ein länglich ausgebildeter Schmierstoffeinsatz in einer axial verlaufenden Schmiereinsatzausnehmung angeordnet, wodurch er optimal für eine axial begrenzte Schlagbewegung des Einsteckendes dimensioniert ist.

Vorteilhaft weist der Schmierstoffeinsatz zumindest einen quer zu seiner Längserstreckung auskragenden Befestigungsclip auf, weiter vorteilhaft im länglichen Mittelbereich, der in einer zugeordneten Clipausnehmung befestigt ist, wodurch insbesondere eine geeignete axiale Befestigung erfolgt.

Vorteilhaft weist die Clipausnehmung einen Hinterschnitt auf, wodurch der mit einem zugeordneten Befestigungsclip versehene Schmierstoffeinsatz unverlierbar formschlüssig befestigt ist. Die Monatage des zugeordneten Schmierstoffeinsatzes mit dem Befestigungsclip in der hinterschnittenen Clipausnehmung erfolgt vorteilhaft unter Druckverspannung des Befestigungsclips.

Vorteilhaft ist der längliche Schmierstoffeinsatz schalenförmig ausgebildet, weiter vorteilhaft als Zylinderabschnitt, wodurch eine grosse äussere selbstschmierende Oberfläche ausgebildet wird.

Vorteilhaft weist der schalenförmige Schmierstoffeinsatz umfänglich beidseitig je einen Befestigungsclip auf, wodurch vermittelt über die Bauteilsteifigkeit des Schmierstoffeinsatzes ein Clip-Effekt erzielt wird, der die formschlüssige Fixierung der Befestigungsclips zusätzlich kraftschlüssig unterstützt und zudem die Montage vereinfacht.

Vorteilhaft ersteckt sich der Schmierstoffeinsatz zumindest über eine axiale Nutenlänge einer axial verlaufenden Drehmitnahmenut, wodurch über den gesamten hochverschleissbeanspruchten Bereich der Drehmitnahmenut eine Selbstschmierung erfolgt.

Vorteilhaft bildet der Schmierstoffeinsatz selbst eine Drehmitnahmenut aus, wodurch der hochverschleissbeanspruchte Bereich der Drehmitnahmenut optimal selbstgeschmiert ist.

Vorteilhaft sind mehrere, weiter vorteilhaft zwei Schmierstoffeinsätze vorhanden, die jeweils in einer umfänglich verteilt, weiter vorteilhaft gleich verteilt, angeordneten Schmiereinsatzausnehmung angeordnet sind, wodurch die Selbstschmierung umfänglich verteilt erfolgt.

Vorteilhaft erstreckt sich die Gesamtheit der Schmierstoffeinsätze umfänglich über mindestens die Hälfte, weiter vorteilhaft über zumindest zwei Drittel des Gesamtumfangs des Einsteckendes, wodurch der überwiegende Teil des Gesamtumfangs selbstgeschmiert ist.

Vorteilhaft weist das Einsteckende genau zwei, gegenüberliegende Schmierstoffeinsätze auf, die jeweils genau eine Drehmitnahmenut aufweisen, wodurch über nur zwei verschiedene Bauteile ein marktübliches Einsteckende (oft als T- oder SDS-Einsteckende bezeichnet) dreiteilig ausgebildet wird.

Vorteilhaft sind zumindest zwei Schmierstoffeinsätze mit unterschiedlich ausgebildeten und/oder angeordneten Drehmitnahmenuten vorhanden, wodurch unsymmetrische Symmetrien einfach realisierbar sind. So ist es bspw. technologisch einfach möglich, mit ein und demselben aus Werkstoffstahl bestehenden Grundkörper durch modulare Kombination mit verschiedenen Schmierstoffeinsätzen geometrisch unterschiedliche Einsteckenden herzustellen, die in bestimmten Anwendungsbereichen bzw. Märkten benötigt werden.

Vorteilhaft weist das Einsteckende genau zwei, gegenüberliegende Schmierstoffeinsätze auf, wobei der erste Schmierstoffeinsatz genau eine Drehmitnahmenut aufweist und der zweite Schmierstoffeinsatz genau zwei Drehmitnahmenuten aufweist, wodurch ein für Durchmesser grösser 14 mm marktübliches Einsteckende (oft als Y- oder SDS Max - Einsteckende bezeichnet) dreiteilig ausgebildet wird.

Vorteilhaft ist bei einem Set von Werkzeugen mit verschiedenen Einsteckenden mit Schmiermitteleinsätzen der Grundkörper identisch ausgebildet, wodurch bei der Herstellung die Anzahl unterschiedlicher Bauteile reduziert ist.

Die Erfindung wird bezüglich eines vorteilhaften Ausführungsbeispiels näher erläutert mit:
Fig. 1 als Einsteckende in drei Explosionsdarstellungen mit verschiedenen Ansichtsgruppen a und b
Fig. 2 als Variante in drei Explosionsdarstellungen mit verschiedenen Ansichtsgruppen a und b

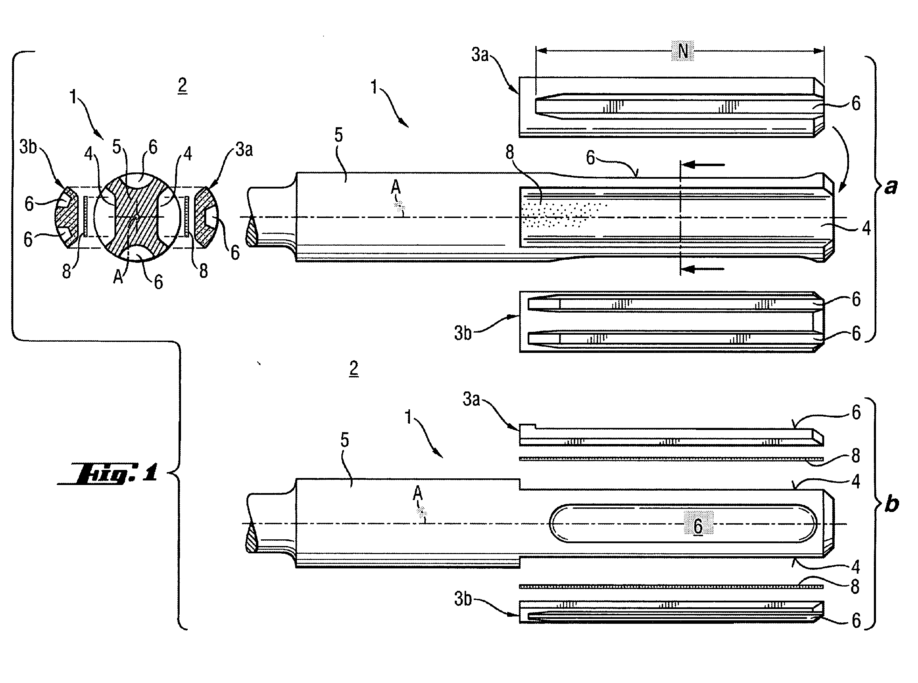

Nach Fig. 1 weist ein zum schlagenden Antrieb durch eine Handwerkzeugmaschine längs der Achse A geeignet ausgestaltetes Einsteckende 1 eines nur teilweise dargestellten Werkzeugs 2 zwei umfänglich gegenüberliegende selbstschmierende, länglich ausgebildete Schmierstoffeinsätze 3a (das rückseitige ist in der Bildebene gedreht dargestellt), 3b auf, welche in je einer zugeordneten Schmierstoffeinsatzausnehmung 4 im metallischen Grundkörper 5 des Werkzeugs 2 befestigt sind. Der in der zugeordneten Schmierstoffeinsatzausnehmung 4 mittels Klebstoff 8 stoffschlüssig mit dem Grundkörper 5 verbundene Schmierstoffeinsatz 3a besteht als Trägermaterial aus porösen Sinterwerkstoff und beinhaltet ein Trockenschmiermittel in Form von Graphit, das im Trägermaterial feinverteilt eingelagert ist. Der Schmierstoffeinsatz 3a ersteckt sich etwas über eine axiale Nutenlänge N einer axial verlaufenden Drehmitnahmenut 6 hinaus, welche der Schmierstoffeinsatz 3a vollständig selbst ausbildet. Beide Schmierstoffeinsätze 3a, 3b sind unterschiedlich ausgebildet, wobei der Schmierstoffeinsatz 3a genau eine Drehmitnahmenut 6 und der Schmierstoffeinsatz 3b genau zwei Drehmitnahmenuten 6 aufweist.

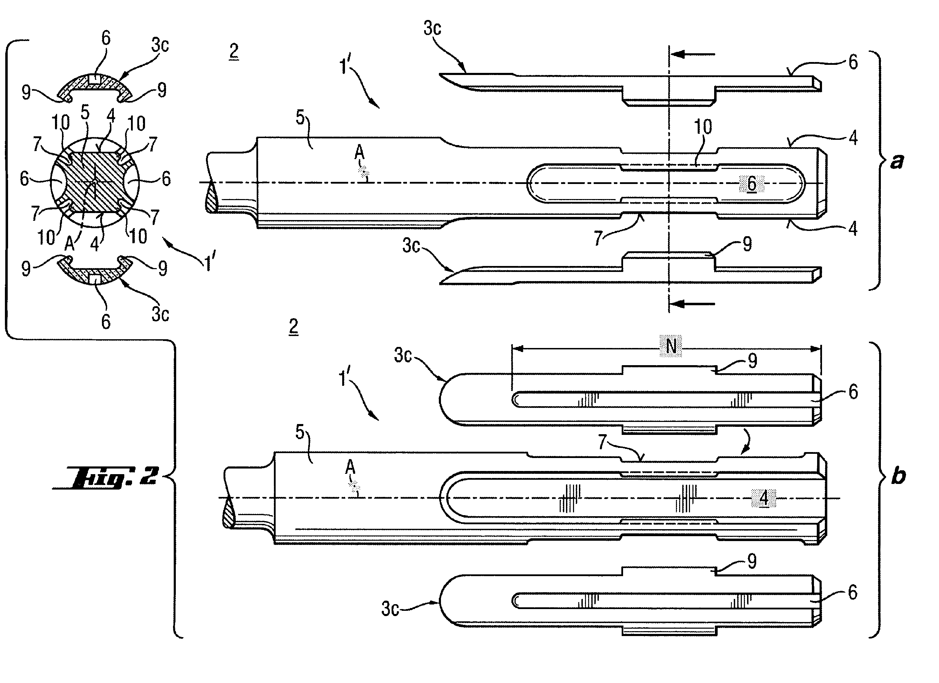

Nach Fig. 2 weist ein alternatives zum schlagenden Antrieb durch eine Handwerkzeugmaschine längs der Achse A geeignet ausgestaltetes Einsteckende 1' eines nur teilweise dargestellten Werkzeugs 2 einen selbstschmierenden Schmierstoffeinsatz 3c (das rückseitige ist in der Bildebene gedreht dargestellt) auf, welcher formschlüssig in einer zugeordneten Schmierstoffeinsatzausnehmung 4 im metallischen Grundkörper 5 des Werkzeugs 2 befestigt ist. Das poröse Trägermaterial des Schmierstoffeinsatz 3c besteht aus einem hochtemperaturbeständigen Polymerwerkstoff in Form von PEEK. Der längliche Schmierstoffeinsatz 3c ist schalenförmig als Zylinderabschnitt ausgebildet und weist im länglichen Mittelbereich umfänglich beidseitig je einen Befestigungsclip 9 auf, der im Grundkörper 5 in einer zugeordneten Clipausnehmung 7 befestigt ist, die umfänglich beidseitig einen tangentialen Hinterschnitt 10 aufweist. Die Gesamtheit der umfänglich gegenüberliegenden Schmierstoffeinsätze 3c erstreckt sich umfänglich über zwei Drittel des Gesamtumfangs des Einsteckendes 1', wobei beide Schmierstoffeinsätze 3c identisch sind und jeweils genau eine Drehmitnahmenut 6 aufweisen.

Bis auf die für die wählfrei kombinierbare Art der Befestigung als stoffschlüssig, formschlüssig oder beides benötigten Merkmale 7, 8, 9, 10 ist bei einem Set von Werkzeugen 2 nach den Fig. 1 und Fig. 2 mit verschiedenen Einsteckenden 1, 1' mit Schmierstoffeinsätzen 3a, 3b bzw. 3c der Grundkörper 5 identisch ausgebildet.

## Patentansprüche

1. Werkzeug (2), ausgebildet als Schlagbohrer oder Schlagmeißel, das zumindest teilweise von einer Handwerkzeugmaschine schlagend antreibbar ist, mit einem Grundkörper (5), **dadurch gekennzeichnet, dass** an einem Einsteckende (1) zumindest ein selbstschmierender Schmierstoffeinsatz (3a, 3b, 3c) vorhanden ist, welcher in einer zugeordneten Schmiereinsatzausnehmung (4) im Grundkörper (5) befestigt ist.

2. Werkzeug (2) nach Anspruch 1, **dadurch gekennzeichnet, dass** der Schmierstoffeinsatz (3a, 3b, 3c) aus einem porösen Trägermaterial besteht, welcher ein Trockenschmiermittel beinhaltet.

3. Werkzeug (2) nach Anspruch 2, **dadurch gekennzeichnet, dass** das poröse Trägermaterial aus einem Sinterwerkstoff besteht.

4. Werkzeug (2) nach Anspruch 2, **dadurch gekennzeichnet, dass** das poröse Trägermaterial aus einem hochtemperaturbeständigen Polymerwerkstoff besteht.

5. Werkzeug (2) nach einem der vorherigen Ansprüche, **dadurch gekennzeichnet, dass** der Schmierstoffeinsatz (3a, 3b) stoffschlüssig in der zugeordneten Schmiereinsatzausnehmung (4) befestigt ist.

6. Werkzeug (2) nach einem der vorherigen Ansprüche, **dadurch gekennzeichnet, dass** der Schmierstoffeinsatz (3c) formschlüssig in der zugeordneten Schmiereinsatzausnehmung (4) befestigt ist.

7. Werkzeug (2) nach einem der vorherigen Ansprüche, **dadurch gekennzeichnet, dass** der Schmierstoffeinsatz (3a, 3b, 3c) länglich ausgebildet ist.

8. Werkzeug (2) nach Anspruch 7, **dadurch gekennzeichnet, dass** der länglich ausgebildeter Schmierstoffeinsatz in einer axial verlaufenden Schmiereinsatzausnehmung angeordnet ist.

9. Werkzeug (2) nach einem der vorherigen Ansprüche, **dadurch gekennzeichnet, dass** der Schmierstoffeinsatz (3a, 3b, 3c) zumindest einen quer zu seiner Längserstreckung auskragenden Befestigungsclip (9) aufweist.

10. Werkzeug (2) nach Anspruch 9, **dadurch gekennzeichnet, dass** eine Befestigungsclip (9) zugeordnete Clipausnehmung (7) der Schmiereinsatzausnehmung (4) einen Hinterschnitt (10) aufweist.

11. Werkzeug (2) nach einem der Ansprüche 7 bis 10, **dadurch gekennzeichnet, dass** der längliche Schmierstoffeinsatz (3c) schalenförmig ausgebildet ist.

12. Werkzeug (2) nach Anspruch 11, **dadurch gekennzeichnet, dass** der schalenförmige Schmierstoffeinsatz (3c) umfänglich beidseitig je einen Befestigungsclip (7) aufweist.

13. Werkzeug (2) nach einem der vorherigen Ansprüche, **dadurch gekennzeichnet, dass** sich der Schmierstoffeinsatz (3a, 3b, 3c) zumindest über eine axiale Nutenlänge (N) einer axial verlaufenden Drehmitnahmenut (6) ersteckt.

14. Werkzeug (2) nach einem der vorherigen Ansprüche, **dadurch gekennzeichnet, dass** der Schmierstoffeinsatz (3a, 3b, 3c) selbst eine Drehmitnahmenut (6) ausbildet.

15. Werkzeug (2) nach einem der vorherigen Ansprüche, **dadurch gekennzeichnet, dass** mehrere Schmierstoffeinsätze (3a, 3b, 3c) vorhanden sind, die jeweils in einer umfänglich verteilt angeordneten Schmiereinsatzausnehmung (4) angeordnet sind.

16. Werkzeug (2) nach einem der vorherigen Ansprüche, **dadurch gekennzeichnet, dass** sich die Gesamtheit der Schmierstoffeinsätze (3a, 3b, 3c) umfänglich über mindestens die Hälfte des Gesamtumfangs des Einsteckendes erstreckt.

17. Werkzeug (2) nach Anspruch 15 oder 16, **dadurch gekennzeichnet, dass** genau zwei, gegenüberliegende Schmierstoffeinsätze (3c) vorhanden sind, die jeweils genau eine Drehmitnahmenut (6) aufweisen.

18. Werkzeug (2) nach einem der vorherigen Ansprüche, **dadurch gekennzeichnet, dass** zumindest zwei Schmierstoffeinsätze (3a, 3b) mit unterschiedlich ausgebildeten und/oder angeordneten Drehmitnahmenuten (6) vorhanden sind.

19. Werkzeug (2) nach Anspruch 18, **dadurch gekennzeichnet, dass** genau zwei, gegenüberliegende Schmierstoffeinsätze (3a, 3b) vorhanden sind, wobei der erste Schmierstoffeinsatz (3a) genau eine Drehmitnahmenut (6) aufweist und der zweite Schmierstoffeinsatz (3b) genau zwei Drehmitnahmenuten (6) aufweist.

20. Werkzeug (2) nach einem der vorherigen Ansprüche, **dadurch gekennzeichnet, dass** bei einem Set von Werkzeugen (2) mit verschiedenen Einsteckenden (1, 1') mit Schmiermitteleinsätzen (3a, 3b, 3c) der Grundkörper (5) identisch ausgebildet ist.

## Claims

1. Tool (2) configured as a hammer drill bit or hammer chisel which is at least partially percussively drivable by a hand tool machine and comprises a base body (5), **characterised in that**, at an insertion end (1), at least one self-lubricating lubricant insert (3a, 3b, 3c) is provided which is fastened in an associated lubricant insert recess (4) in the base body (5).

2. Tool (2) according to claim 1, **characterised in that** the lubricant insert (3a, 3b, 3c) comprises a porous substrate containing a dry lubricant.

3. Tool (2) according to claim 2, **characterised in that** the porous substrate is made from a sintered material.

4. Tool (2) according to claim 2, **characterised in that** the porous substrate comprises a high temperature-resistant polymer material.

5. Tool (2) according to one of the preceding claims, **characterised in that** the lubricant insert (3a, 3b) is fastened fusion bonded into the associated lubricant insert recess (4).

6. Tool (2) according to one of the preceding claims, **characterised in that** the lubricant insert (3c) is fastened in form-fitting manner into the associated lubricant insert recess (4).

7. Tool (2) according to one of the preceding claims, **characterised in that** the lubricant insert (3a, 3b, 3c) is configured elongate.

8. Tool (2) according to claim 7, **characterised in that** the elongate lubricant insert is arranged in an axially extending lubricant insert recess.

9. Tool (2) according to one of the preceding claims, **characterised in that** the lubricant insert (3a, 3b, 3c) comprises at least one fastening clip (9) protruding transversely to the longitudinal extent thereof.

10. Tool (2) according to claim 9, **characterised in that** a clip recess (7) of the lubricant insert recess (4) associated with a fastening clip (9) has an undercut (10).

11. Tool (2) according to one of the claims 7 to 10, **characterised in that** the elongate lubricant insert (3c) is configured shell-shaped.

12. Tool (2) according to claim 11, **characterised in that** the shell-shaped lubricant insert (3c) has a fastening clip (9) arranged peripherally on each side.

13. Tool (2) according to one of the preceding claims, **characterised in that** the lubricant insert (3a, 3b, 3c) extends at least over an axial groove length (N) of an axially extending rotary driving groove (6).

14. Tool (2) according to one of the preceding claims, **characterised in that** the lubricant insert (3a, 3b, 3c) also has a rotary driving groove (6).

15. Tool (2) according to one of the preceding claims, **characterised in that** a plurality of lubricant inserts (3a, 3b, 3c) is provided, each being arranged in a lubricant insert recess (4) arranged circumferentially distributed.

16. Tool (2) according to one of the preceding claims, **characterised in that** the entirety of the lubricant inserts (3a, 3b, 3c) extends circumferentially over at least half of the overall circumference of the insertion end.

17. Tool (2) according to claim 15 or 16, **characterised in that** precisely two opposing lubricant inserts (3c) are provided, each having precisely one rotary driving groove (6).

18. Tool (2) according to one of the preceding claims, **characterised in that** at least two lubricant inserts (3a, 3b) are provided, having differently configured and/or arranged rotary driving grooves (6).

19. Tool (2) according to claim 18, **characterised in that** precisely two opposing lubricant inserts (3a, 3b) are provided, wherein the first lubricant insert (3a) has precisely one rotary driving groove (6) and the second lubricant insert (3b) has precisely two rotary driving grooves (6).

20. Tool (2) according to one of the preceding claims, **characterised in that** in a set of tools (2) having different insertion ends (1, 1') with lubricant inserts (3a, 3b, 3c), the base body (5) is identically configured.

## Revendications

1. Outil (2), réalisé sous forme de foret à percussion ou de burin à percussion, qui peut être entraîné en percussion au moins en partie par une machine outil manuelle, avec un corps de base (5), **caractérisé en ce qu'**au niveau d'une queue de foret (1), il y a au moins un insert de lubrification autolubrifiant (3a, 3b, 3c), qui est fixé dans un évidement pour insert de lubrification (4) affecté dans le corps de base (5).

2. Outil (2) selon la revendication 1, **caractérisé en ce que** l'insert de lubrification (3a, 3b, 3c) est en un matériau support poreux qui contient un lubrifiant sec.

3. Outil (2) selon la revendication 2, **caractérisé en ce que** le matériau support poreux est en un matériau fritté.

4. Outil (2) selon la revendication 2, **caractérisé en ce que** le matériau support poreux est en un matériau polymère à haute résistance thermique.

5. Outil (2) selon l'une quelconque des revendications précédentes, **caractérisé en ce que** l'insert de lubrification (3a, 3b) est fixé par correspondance de matériau dans l'évidement pour insert de lubrification (4) affecté.

6. Outil (2) selon l'une quelconque des revendications précédentes, **caractérisé en ce que** l'insert de lubrification (3c) est fixé par complémentarité de forme dans l'évidement pour insert de lubrification (4) affecté.

7. Outil (2) selon l'une quelconque des revendications précédentes, **caractérisé en ce que** l'insert de lubrification (3a, 3b, 3c) est réalisé sous forme allongée.

8. Outil (2) selon la revendication 7, **caractérisé en ce que** l'insert de lubrification réalisé sous forme allongée est disposé dans un évidement pour insert de lubrification s'étendant de manière axiale.

9. Outil (2) selon l'une quelconque des revendications précédentes, **caractérisé en ce que** l'insert de lubrification (3a, 3b, 3c) présente au moins un clip de fixation (9) en saillie transversalement à son extension longitudinale.

10. Outil (2) selon la revendication 9, **caractérisé en ce qu'**un évidement pour clip (7) affecté au clip de fixation (9) de l'évidement pour insert de lubrification (4) présente une contre-dépouille (10).

11. Outil (2) selon l'une quelconque des revendications 7 à 10, **caractérisé en ce que** l'insert de lubrification (3c) allongé est réalisé en forme de coquille.

12. Outil (2) selon la revendication 11, **caractérisé en ce que** l'insert de lubrification (3c) en forme de coquille présente sur la périphérie des deux côtés respectivement un clip de fixation (7).

13. Outil (2) selon l'une quelconque des revendications précédentes, **caractérisé en ce que** l'insert de lubrification (3a, 3b, 3c) s'étend au moins sur une longueur de rainure axiale (N) d'une rainure d'entraînement en rotation (6) s'étendant de manière axiale.

14. Outil (2) selon l'une quelconque des revendications précédentes, **caractérisé en ce que** l'insert de lubrification (3a, 3b, 3c) forme lui-même une rainure d'entraînement en rotation (6).

15. Outil (2) selon l'une quelconque des revendications précédentes, **caractérisé en ce qu'**il y a plusieurs inserts de lubrification (3a, 3b, 3c) qui sont disposés respectivement dans un évidement pour insert de lubrification (4) réparti sur la périphérie.

16. Outil (2) selon l'une quelconque des revendications précédentes, **caractérisé en ce que** l'ensemble des inserts de lubrification (3a, 3b, 3c) s'étend sur la périphérie sur au moins la moitié de la totalité de la périphérie de la queue de foret.

17. Outil (2) selon la revendication 15 ou 16, **caractérisé en ce qu'**il y a exactement deux inserts de lubrification (3c) opposés qui présentent respectivement exactement une rainure d'entraînement en rotation (6).

18. Outil (2) selon l'une quelconque des revendications précédentes, **caractérisé en ce qu'**il y a au moins deux inserts de lubrification (3a, 3b) avec des rainures d'entraînement en rotation (6) réalisées et/ou disposées différemment.

19. Outil (2) selon la revendication 18, **caractérisé en ce qu'**il y a exactement deux inserts de lubrification (3a, 3b) opposés, le premier insert de lubrification (3a) présentant exactement une rainure d'entraînement en rotation (6) et le deuxième insert de lubrification (3b) présentant exactement deux rainures d'entraînement en rotation (6).

20. Outil (2) selon l'une quelconque des revendications précédentes, **caractérisé en ce que** dans un jeu d'outils (2) avec différentes queues de foret (1, 1') avec des inserts de lubrification (3a, 3b, 3c), le corps de base (5) est réalisé de manière identique.
